# EUROPEAN PATENT SPECIFICATION

(11) **EP 2 675 604 B1**
(45) Date of publication and mention of the grant of the patent: **29.06.2016**
(21) Application number: 12746807.2
(22) Date of filing: 25.01.2012
(51) Int. Cl.: B29C 45/27

(54) **MOLD-TOOL SYSTEM INCLUDES ONE-PIECE MANIFOLD ASSEMBLY HAVING EACH INLET IN FLUID COMMUNICATION WITH OUTLETS**
FORMWERKZEUGSYSTEM MIT EINEM EINTEILIGEN SAMMELROHR MIT FLÜSSIGKEITSKOMMUNIKATION ZWISCHEN JEDEM EINLASS UND JEDEM AUSLASS
SYSTÈME D'OUTIL DE MOULE COMPRENANT UN ENSEMBLE COLLECTEUR MONOBLOC DONT LES ENTRÉES SONT EN COMMUNICATION FLUIDIQUE AVEC LES SORTIES

(30) Priority: 18.02.2011 US 201161444150 P; 24.01.2012 US 201261590083 P
(43) Date of publication of application: 25.12.2013
(73) Proprietor: Husky Injection Molding Systems Ltd., Bolton, ON L7E 5S5 (CA)
(72) Inventor: CHASE, Sean Arthur, Essex Juncition Vermont 05452 (US); DEZON-GAILLARD, Patrice Fabien, Jericho Vermont 05465 (US); MACLEOD, Darrin Albert, Jeffersonville Vermont 05464 (US)
(74) Representative: Vossius, Corinna
(86) International application number: PCT/US2012/022456
(87) International publication number: WO 2012/112262

(56) References cited:
- EP-A1- 0 778 117
- JP-A- H 106 363
- JP-A- H08 164 543
- JP-A- 2000 271 972
- US-A- 3 704 723
- US-A1- 2004 191 358
- US-A1- 2004 247 739
- US-A1- 2005 244 536
- US-B1- 6 196 826

## Description

### TECHNICAL FIELD

An aspect generally relates to a mold-tool system including: a one-piece manifold assembly with each inlet in fluid communication with a respective at least two outlets.

### BACKGROUND

United States Patent Publication Number 2007/0077328 discloses an injection molding apparatus having a manifold and several manifold melt channels communicating with several hot runner nozzles includes a melt redistribution element. The melt redistribution element is placed at specific locations along the melt channels to balance the uneven shear stress profile accumulated during the flow of a melt along the manifold channels. The melt redistribution element has an unobstructed central melt bore having at its inlet a narrowing tapered channel portion. The melt redistribution element also includes a helical melt pathway portion that surrounds the central melt bore. The incoming melt is first subjected to a pressure increase by the tapered portion that causes the melt to flow at a higher velocity through the central melt bore. The outer portion of the melt is forced to flow along the helical path and thus it changes direction multiple times and partially mixes with the melt flowing through the central melt bore.

United States Patent Number 5989003 discloses an apparatus for molding consecutive streams of differently and homogeneously colored resin in a single mold. The apparatus is used to practice a method including supplying molten resin to a selected one of a plurality of resin passages, injecting colorant selected from a plurality of different colorants into the resin passage, mixing the molten resin and colorant in a mixing element disposed in the resin passage to form a mixture of selectively colored resin, injecting the mixture into the single mold to form a part from the selectively colored resin, and repeating the process by selecting a different resin passage and a different colorant.

United States Patent Publication Number 2007/0119574 discloses a cooling unit for cooling in particular power semiconductors contains a distributor for guiding liquid across a surface to be cooled. The distributor comprises an inlet manifold and outlet manifold, whereby the inlet and outlet manifolds are connected through a flow cell, which has a main flow channel. The main channel is formed as a meandering sequence of channel segments. It has been found, that the transfer of heat by the liquid in the main flow channel can be improved by introducing a bypass flow channel, which allows the flow of liquid from the cell inlet to the cell outlet, wherein the bypass flow channel interconnects the channel segments of the main flow channel.

United States Patent Number 3940224 discloses a plastic injection blow molding manifold that has progressively smaller passageways defined at the mating surfaces between its two primary members. The circular cross sectional inlet area is reduced by one-half in a first cross passageway, and then further reduced in two additional cross passageways in an eight nozzle version. All of these cross passageways are defined at said mating surfaces, and the respective ends of such additional cross passageways communicate with paired outlets, each of which outlets has an associated nozzle and coaxially arranged heating element.

United States Patent Number 4761343 discloses a manifold system for a multi-cavity injection molding system. The manifold system has one elongated bridging manifold, which extends transversely across a number of spaced elongated support manifolds. Each of the support manifolds, in turn, extends across a number of heated probes or nozzles, each of which leads to a gate to a cavity. The bridging manifold has a portion of the hot runner passage extending through it from a single inlet to receive melt from the molding machine to a number of spaced outlets. Each of the support manifolds also has an inlet, which is in alignment with one of the outlets from the bridging manifold and a number of spaced outlets. Each of the outlets of the support manifolds is in alignment with an inlet to one of the probes or nozzles. Each of the manifolds has two way junctions at which a larger diameter portion of the hot runner passage joins two smaller diameter downstream portions. In the bridging manifold, the hot runner passage extends along the same plane as the inlet and outlets, whereas in the support manifold the portion connecting the junctions extends in a transverse plane.

United States Patent Publication Number 2004/0091568 discloses a hot runner manifold for a multi-cavity injection molding system. The manifold is formed in a manifold block and an insert. This insert may be a round bar which outward shape is grooved with flow channel. Or this insert may be combined by a set of a grooved round bar together with matched grooved pipes. This insert will be inserted into the bore of manifold block. This grooved insert work as a flow channel inside the manifold. Compared to the traditional manifold, first this invention can easily help produce a balance-flow manifold. That will shorten the delivery time. Second, this invention can help produce an inexpensive cost of a balance-flow manifold. Third, this invention provides an easier structure to make multiple-drops (such as 12, 16, 32, 64, 256 drops) in an elongated direction with balance flow. Fourth, this invention can provide a manifold structure to help the flow channel of insert to be easily taken off for cleaning. Finally, this invention can provide a very good temperature-balance manifold in order to help molding nice quality plastic for each drop. Because the insert can be made by a good heat-conduct material and then to get an equalized temperature in each drop inside the manifold.

United States Patent Number 5007821 discloses an injection molding heated manifold having a melt passage with a longitudinal portion to convey melt from a molding machine to a number of different nozzles. The steel manifold has a pair of cooling bores extending parallel to and equally spaced on opposite sides of the longitudinal portion of the melt channel. A cooling fluid, such as air, flows through the cooling bores to quickly cool the manifold after the system is shut down to minimize deterioration of the melt in the melt channel. The air flows helically around spiral vanes which are mounted in the cooling bores to avoid temperature stratification along the melt passage.

United States Patent Number 7320589 discloses a method and apparatus for rotating a cross-sectional asymmetrical condition of a laminar flowing material in a hot runner system for supplying a laminar flowing material. The hot runner system has (i) an upstream melt passage, (ii) a pair of intermediary melt passages downstream from the upstream melt passage, and (iii) for at least one intermediary melt passage, an associated pair of downstream melt passages downstream from the at least one intermediary melt passage. The cross-sectional asymmetrical condition of a laminar flowing material is rotated by providing a bending path for orienting at least one path outlet relative to a path inlet to rotate the cross-sectional asymmetrical condition of the laminar flowing material such that the cross-sectional asymmetrical condition is substantially equally divided between the two downstream portions.

United States Patent Number 5536164 discloses a manifold assembly for supplying plastic material from a plastic source to a mold assembly in an injection molding machine. It includes a flexible manifold having an interior conduit connected between the plastic source and the mold assembly. The flexible manifold is configured to define an input connector, a first curved segment attached to the input connector, a second curved segment, an output connector attaching the second curved segment to the mold assembly, and an intermediary segment connecting the first and second curved segments. This provides the flexible manifold with a generally S-shaped configuration that flexes with temperature changes to maintain a substantially constant positioning between the input connector and the output connector, preventing thermally induced movement of the mold assembly with respect to the input connector as heated plastic is injected through the conduit.

United States Patent Publication Number 2004/0247739 discloses a method and apparatus for combining two or more streams of a polymeric material to form a plastic object. The method and apparatus are capable of ending an interior layer of the plastic object at a desired length to avoid the need to clean selected surfaces of components used to form the plastic object. The method and apparatus increase the velocity of the polymeric material, and the increase in the velocity of the polymeric material facilitates the ending of the interior layer of the plastic object.

United States Patent Number 3704723 discloses a manifold for dividing a molten PVC stream into a plurality of branch streams, wherein a trunk passageway is divided into a plurality of diverging branch passageways none of which makes an angle of less than 100° with the trunk passageway and any adjacent two of which converge with one another at a sharp stream splitting wall intersection of 140° or less. In a preferred embodiment four parallel one-fourth to one-half inch secondary branch passageways are provided by dividing a first trunk passageway into two branch passageways symmetrical with respect to the trunk passageway converging with one another in an angle of about 140°, each of which is subsequently divided into secondary branches one of which makes an angle of 110° with the first branch and the other of which is coaxial with the first branch for a short distance and then is angled to parallel the other secondary branch.

Japanese Patent Application Number H08164543 discloses a mold having sprue bushing with four independent passages axially extending therethrough. The opening of each of said passages communicates with an associated runner of a runner assembly of the mold, and each of said runners branch into two branch channels communicating at their outlets with a respectively associated nozzle which feeds a respectively associated mold cavity.

Japanese Patent Application Number H106363 discloses an injection molding machine for reducing both the wastefulness of a synthetic resin material at a time of color replacement, and the programming time for putting the molding machine in operation. A mixing device is connected to the nozzle of an injection cylinder and two branches thereof connect with a central passage of the nozzle. Arranged within each passage of the mixing device are mixing elements for kneading the synthetic resin material. The outlet of each of said passages communicates with an inlet portion of a runner branching therefrom at a right angle. Each runner branches into two melt channels, i.e. an inner branch portion branching from the runner at a right angle, and an outer branch portion which continues with the runner and then turns 90° to become parallel with the inner branch portion. The outlet of each branch portion communicates with an associated nozzle feeding an associated mold cavity. Accordingly, the overall arrangement allows to simultaneously mold two kinds of molded products which are different in color.

European Patent Application Number 0778117 discloses a hot tip injection molding apparatus having a heated melt distribution manifold for conveying melt to a number of gates. A number of nozzle manifolds are closely mounted to the front surface of the heated manifold. Each nozzle manifold has a number of spaced nozzle portions extending from a rear manifold portion. A melt channel branches from an inlet on the rear surface of the rear manifold portion to an outlet on the conical surface of each nozzle portion. The rear surfaces of the nozzle manifolds are rectangular to improve the efficiency of heat transfer from the heated manifold to the nozzle manifolds.

Japanese Patent Application Number 2000271972 discloses an injection mold for efficiently producing a golf ball of high quality. A vulcanized inner nucleus is held within an injection mold having upper and lower molds providing a spherical shell-shaped gap between the inner nucleus and the inner surfaces of a mold cavity. Unvulcanized rubber material is injected into the gap to mold a spherical intermediate product having an unvulcanized rubber layer laminated to the inner nucleus. Hereinafter, the intermediate product is taken out of the mold and charged in a vulcanized mold to vulcanize and mold the unvulcanized rubber layer. The mold has two lower molds, and a single inlet passageway of an upper mold communicates with a pair of passageways each diverging from a trunk passageway at right angles, and having a right-angled end portion from which another pair of passageways diverges. The end portions thereof each communicate with two adjacent mold cavities.

United States Patent Number 6196826 discloses a seepage system for an injection molding apparatus which includes a manifold plate having a first portion and a second portion abutting the first portion, and a seepage passage positioned between the first and second portions. The second portion has at least a portion of a melt passage. The seepage system has an outlet and one or more seepage channels, with each seepage channel being connected to and communicating with the seepage passage. The seepage system further includes one or more seepage bores for receiving the flow of excess material, wherein each seepage bore is connected to and in communication with one of the seepage channels. Gravity is used to assist the flow of excess material from one or more seepage bores through the seepage channels and the seepage passage.

### SUMMARY

According to the present invention, a one-piece manifold assembly for a mold-tool system is provided having the features defined by claim 1.

Other aspects and features of the non-limiting embodiments will now become apparent to those skilled in the art upon review of the following detailed description of the non-limiting embodiments with the accompanying drawings.

### DETAILED DESCRIPTION OF THE DRAWINGS

The non-limiting embodiments will be more fully appreciated by reference to the following detailed description of the non-limiting embodiments when taken in conjunction with the accompanying drawings, in which:
FIG. 1 is a schematic perspective view of a mold-tool system according to one embodiment;
FIG. 2A is a schematic view of one embodiment of a mold-tool system with multiple inlets, each with multiple outlets;
FIG. 2B is a schematic view of a sprue-transition bushing;
FIG. 3 is a schematic view of another embodiment of a mold-tool system;
FIG. 4A is a schematic view of an embodiment of a mold-tool system which forms not part of the present invention; and
FIG. 4B is a schematic view of an embodiment of a mold-tool system which forms not part of the present invention.

The drawings are not necessarily to scale and may be illustrated by phantom lines, diagrammatic representations and fragmentary views. In certain instances, details not necessary for an understanding of the embodiments (and/or details that render other details difficult to perceive) may have been omitted.

### DETAILED DESCRIPTION OF THE NON-LIMITING EMBODIMENT(S)

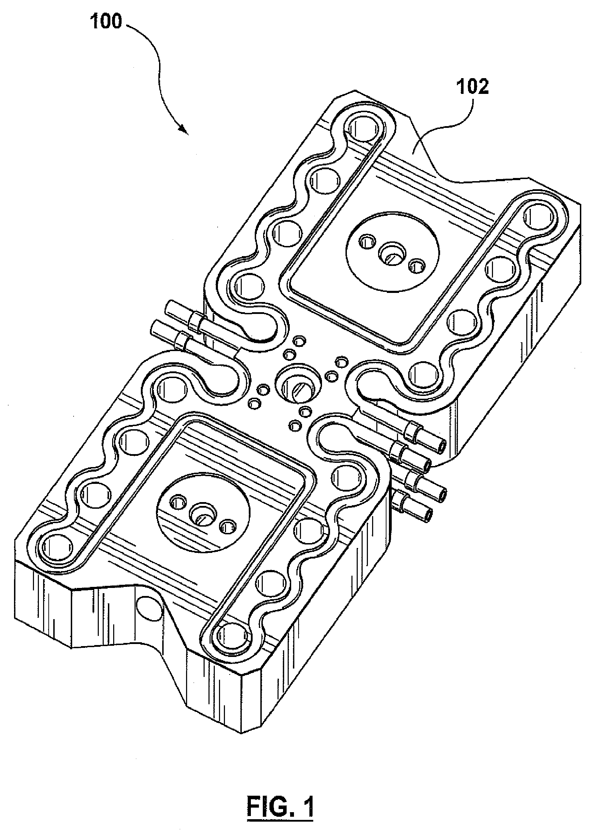

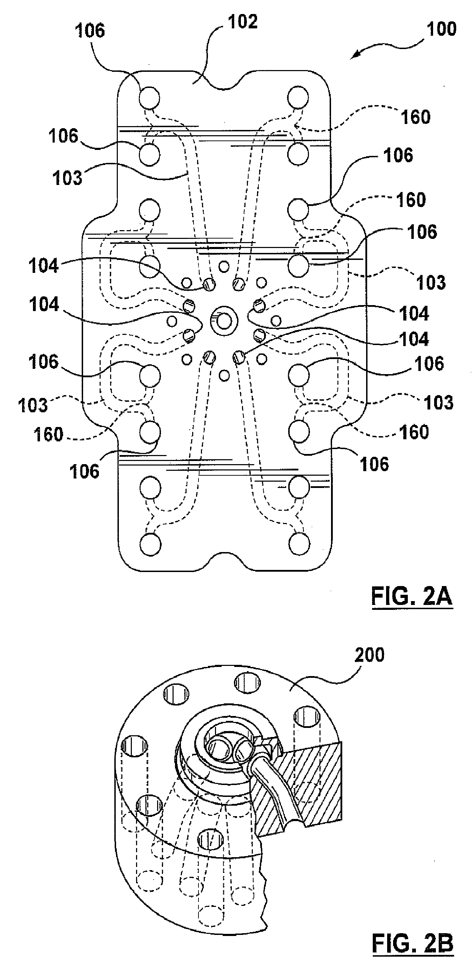

FIGS. 1, 2A, 2B are schematic representations of a mold-tool system (100). FIG. 1 is a perspective view of the mold-tool system (100). The mold-tool system (100) may include components that are known to persons skilled in the art, and these known components will not be described here; these known components are described, at least in part, in the following reference books (for example): (i) *"*Injection Molding Handbook" authored by OSSWALD/TURNG/GRAMANN (ISBN: 3-446-21669-2), (ii) *"*Injection Molding Handbook authored by ROSATO AND ROSATO (ISBN: 0-412-99381-3), (iii) *"*Injection Molding Systems" 3rd Edition authored by JOHANNABER (ISBN 3-446-17733-7) and/or (iv) *"*Runner and Gating Design Handbook" authored by BEAUMONT (ISBN 1-446-22672-9).

The definition of the mold-tool system (100) is as follows: a system that may be positioned and/or used in an envelope defined by a platen system of the molding system, such as, for example, an injection-molding system. The platen system may include a stationary platen and a movable platen that is moveable relative to the stationary platen. The mold-tool system (100) may be used and/or built into (but is not limited to) the following assemblies/system: a runner system, such as a hot runner system or a cold runner system, and/or any sub-assembly or part thereof.

FIG. 2A, depicts an example of the mold-tool system (100) that may include a one-piece manifold assembly (102) having multiple inlets (104) and multiple outlets (106). The one-piece manifold assembly (102) may include a plurality of melt channels (103) that extend between associated ones of the multiple inlets (104) and outlets (106). The outlets (106) are spaced apart from the associated inlets (104). Each channel (103) connects an inlet (104) with at least two outlets (106). Each inlet (104) therefore, may be in fluid communication with at least two outlets (106). In one embodiment of the invention, each inlet (104) may be associated with: (i) two outlets, (ii) three outlets, (iii) four outlets, (iv) five outlets, and/or (v) six outlets, etc. For example, each inlet (104) may be assigned to: (i) a minimum of four outlets (106), (ii) a minimum of three outlets (106), and/or (iii) a minimum of two outlets (106). Other equivalent arrangements may be contemplated that fall within the scope of the invention.

As shown in FIG. 2A, in one embodiment, each of the melt channels (103) has a length that is substantially equal to a length of some, or all, of the other melt channels. Applicant has recognized that it may be desirable for the length of each of the melt channels to be substantially equal because this equal length allows the flow characteristics at each of the outlets (106) to be substantially similar.

As shown in the embodiment of FIG. 2A, each of the melt channels (103) includes a bifurcation (160) where the melt channel branches into at least a first branch and a second branch. As illustrated, the length of the first branch may be substantially identical to the length of the second branch.

In one embodiment, it may be desirable to position the bifurcation (160) closer to the outlets (106) than to the inlets (104). When the flow first passes through the inlets, the flow may be less symmetrical. As the flow passes along the length of the melt channel (103) towards the outlets (104), the flow may develop a substantially symmetrical flow pattern. Thus, in one embodiment, the bifurcation (160) is positioned downstream of the inlet, in a location where the flow pattern is substantially symmetrical. In one embodiment, the bifurcation (160) is positioned at a location in which the distance between the inlet (104) and the bifurcation (160) is at least 60% of the length of the melt channel (103). In another embodiment, the bifurcation (160) is positioned at a location in which the distance between the inlet (104) and the bifurcation (160) is at least 70% of the length of the melt channel (103). In yet another embodiment, the bifurcation (160) is positioned at a location in which the distance between the inlet (104) and the bifurcation (160) is at least 80% of the length of the melt channel (103), and in yet another embodiment, the bifurcation (160) is positioned at a location in which the distance between the inlet (104) and the bifurcation (160) is at least 90% of the length of the melt channel (103).

The outlets (106) may be arranged to feed mold cavities. In one embodiment, one outlet (106) is configured to feed a first cavity, whereas an adjacent associated outlet (106) is configured to feed a second cavity. Typically, each outlet (106) may be configured to feed a separate mold cavity. In another embodiment, one or more of the outlets (106) may be configured to feed the same mold cavity.

The manifold assembly (102) may be formed of a single body, and may be manufactured by using known 3D manufacturing methods. Examples of 3D manufacturing methods include direct digital manufacturing, sometimes called rapid, direct, instant, or on-demand manufacturing, and is a manufacturing process which creates physical parts directly from 3D CAD files or data using computer-controlled additive fabrication techniques without human intervention. This technique is also called 3D printing, or rapid prototyping. When a small low cost device is used, it may also called desktop or personal manufacturing. Additive freeform fabrication is solely intended to describe production of a 3D printed part that is to be used as the final product with minimal post-processing. Additive freeform fabrication is simply an alternative way of describing the 3D printing process itself. Additive manufacturing is also referred to as Additive Freeform Fabrication, Rapid Prototyping, Layered manufacturing or 3D printing. This technique physically constructs 3D geometries directly from 3D CAD files. Additive Manufacturing or Direct Digital Manufacturing is an extension of Rapid Prototyping to real parts for use as final products (not prototypes). A main technology used for additive manufacturing is Selective laser sintering, a process which uses laser energy to fuse material to create a solid object. Another technology is called Fused Deposition Modeling (FDM), which is commonly used for rapid prototyping, but is becoming more and more popular in direct digital manufacturing.

It is believed that the mold-tool system (100) of the present invention may reduce pressure drop, improve imbalance, and/or reduce the amount of shear heating in a molding resin. It is believed that the mold-tool system (100) may provide a geometrically evenly divided melt flow, into a homogeneous melt flow front. It is believed that the mold-tool system (100) may reduce an amount of A.A. (Acetaldehyde) levels that may be created for PET resin. Polyethylene terephthalate (PET), is a thermoplastic polymer resin of the polyester family and is used in synthetic fibers; beverage, food and other liquid containers; thermoforming applications; and engineering resins, often in combination with glass fiber. Acetaldehyde is a gas that is released from PET due to presence of moisture during the melting of PET in an injection molding process. Acetaldehyde gas may get trapped within the walls of preforms (articles molded from PET); Acetaldehyde may be slowly released once the preform is blow molded into a container (such as a bottle). Acetaldehyde may affect the taste and flavor of the some types of products packed in the container. Poorly designed and manufactured screws (used in a melt-preparation system), hot-runner systems and resin dryers may result in higher generation of A.A. levels. A poor manufacturing process may also result in higher A.A. levels. High A.A. levels may also result from use of high levels of regrind (recycled PET).

FIG. 2B depicts a sprue-transition bushing (200) that may communicate with inlets (104). For example, the one-piece manifold assembly (102) may have sixteen (16) drops (outlets) and may have eight (8) inlets that interface with the sprue-transition bushing (200). Each inlet (104) may feed resin to a melt channel (103) in the one-piece manifold assembly (102), and the melt channel (103) may split somewhere between the inlet and the respective outlets. The mold-tool system (100) may reduce the number of times the resin is split in the manifold assembly (102), which leads to an improvement in balance because resin splits in the melt channel (103) may be one of the main causes of imbalance in a hot-runner system.

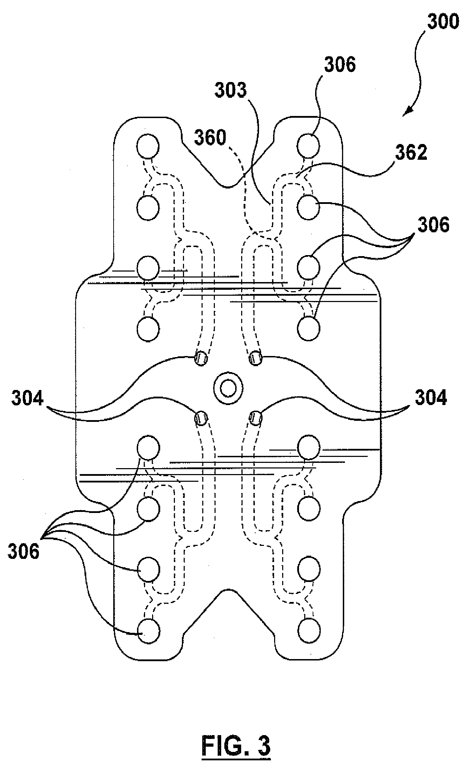

FIG. 3 is a schematic representation of another example of the mold-tool system (300). In the embodiment illustrated in FIG. 3, the mold-tool system (300) has a ratio of one inlet (304) to four outlets (306). Each inlet (304) is in fluid communication with a respective set of outlets (or grouping of outlets) (306). There are a total of four (4) inlets (304), and a total of sixteen (16) outlets (306).

In this embodiment illustrated in FIG. 3, each melt channel (303) includes a first bifurcation (360) and a second bifurcation (362). In one embodiment, both the first bifurcation (360) and the second bifurcation (362) are positioned at a location in which the distance between the inlet (104) and each bifurcation (360, 362) is at least 60% of the length of the melt channel (303). In another embodiment, both the first bifurcation (360) and the second bifurcation (362) are positioned at a location in which the distance between the inlet (304) and each bifurcation (360, 362) is at least 70% of the length of the melt channel (303). In yet another embodiment, both the first bifurcation (360) and the second bifurcation (362) are positioned at a location in which the distance between the inlet (304) and each bifurcation (360, 362) is at least 80% of the length of the melt channel (303), and in yet another embodiment, both the first bifurcation (360) and the second bifurcation (362) are positioned at a location in which the distance between the inlet (304) and each bifurcation (360, 362) is at least 90% of the length of the melt channel (303).

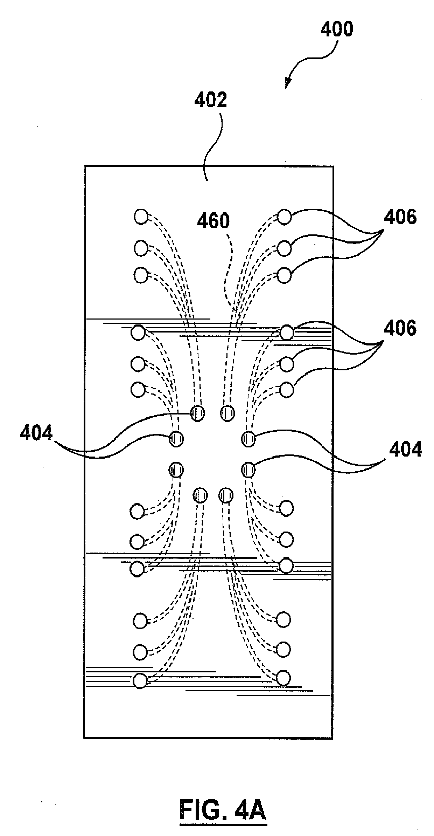

FIG. 4A is a schematic representation of an example of a mold-tool system (400) which forms not part of the present invention. According to the example depicted in FIG. 4A, the mold-tool system (400) has a ratio of one inlet (404) to three outlets (406). Each inlet (404) is in fluid communication with a respective set or grouping of the outlets (406). That is, there are a total of eight (8) inlets (404), and a total of twenty four (24) outlets (406).

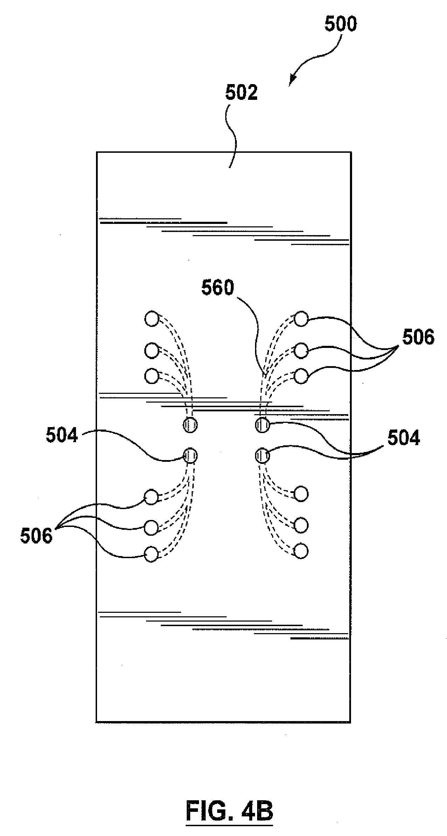

FIG. 4B is a schematic representation of an example of a mold-tool system (500) which forms not part of the present invention. According to the example depicted in FIG. 4B, the mold-tool system (500) has a ratio of one inlet (504) to three outlets (506). Each inlet (504) is in fluid communication with a respective set or grouping of the outlets (506). That is, there are a total of four (4) inlets (504), and a total of twelve (12) outlets (506). It will be appreciated that another example may be arranged such that (without limitation) there is a ratio of one inlet (504) to two outlets (506).

As illustrated, in the particular embodiments shown in FIGS. 4A-4B, the bifurcations (460 and 560) are positioned closer to the inlets (504) than to the outlets (506). This is in contrast to the embodiments illustrated in FIGS. 2A and 3, where the bifurcations (160, 360, 362) are positioned closer to the outlets (506) than to the inlets (504).

It will be appreciated that the assemblies and modules described above may be connected with each other as may be required to perform the desired functions and tasks that are within the scope of persons of skill in the art without having to describe each and every one of them in explicit terms. There is no particular assembly, components, or software code that is superior to any available to the art. There is no particular mode of practicing the inventions and/or examples of the invention that are superior to others, so long as the functions may be performed.

## Claims

1. A one-piece manifold assembly for a mold-tool system (100), comprising:
a one piece-manifold assembly (102) formed of a singly body and having a first outer surface and a second outer surface, the first outer surface and the second outer surface being substantially planar and parallel to each other;
a plurality of inlets (104), each inlet being defined at the first outer surface of the one-piece manifold assembly (102);
a plurality of outlets (106), each outlet being defined at the second outer surface of the one-piece manifold assembly 102) and configured to feed a separate mold cavity, wherein the ratio of outlets to inlets is at least 2:1;
a plurality of melt channels (103), wherein each melt channel (103) extends between a single inlet and at least two outlets, each outlet being connected to the melt channel (103) by an associated melt channel section, such that each inlet is in fluid communication with at least a first melt channel section associated with one outlet, and a second melt channel selection associated with another outlet, wherein the first melt channel section has a first length and the second melt channel section has a second length, **characterised in that** the first length is substantially equal to the second length, and
a bifurcation (160) where the first melt channel section associated with an outlet and the second melt channel section associated with another outlet diverge, wherein the bifurcation is positioned at a location in which a distance between the inlet and the bifurcation is at least 60% of a length of the melt channel.

2. The one-piece manifold assembly of claim 1, wherein the bifurcation (160) is positioned at a location in which a distance between the inlet and the bifurcation is at least 70% of a length of the melt channel.

3. The one-piece manifold assembly of claim 1, wherein the bifurcation (160) is positioned at a location in which a distance between the inlet and the bifurcation is at least 80% of a length of the melt channel.

4. The one-piece manifold assembly of claim 1, wherein the bifurcation (160) is positioned at a location in which a distance between the inlet and the bifurcation is at least 90% of a length of the melt channel.

## Patentansprüche

1. Einstückige Sammelleitungsanordnung für ein Formwerkzeugsystem (100), umfassend:
eine einstückige Sammelleitungsanordnung (102), die aus einem einzelnen Körper gebildet ist und eine erste Außenfläche und eine zweite Außenfläche aufweist, wobei die erste Außenfläche und die zweite Außenfläche im Wesentlichen eben und parallel zueinander sind;
eine Vielzahl von Einlässen (104), wobei jeder Einlass an einer ersten Außenfläche der einteiligen Sammelleitungsanordnung (102) definiert ist;
eine Vielzahl von Auslässen (106), wobei jeder Auslass an der zweiten Außenfläche der einteiligen Sammelleitungsanordnung (102) definiert und dazu ausgebildet ist, einen separaten Formhohlraum zu versorgen, wobei das Verhältnis von Auslässen und Einlässen zumindest 2:1 beträgt;
eine Vielzahl von Schmelzekanälen (103), wobei jeder Schmelzekanal (103) sich zwischen einem einzelnen Einlass und zumindest zwei Auslässen erstreckt, und wobei jeder Auslass mit dem Schmelzekanal (103) durch einen zugeordneten Schmelzekanalabschnitt verbunden ist, so dass jeder Einlass in Fluidverbindung mit zumindest einem ersten Schmelzekanalabschnitt steht, der einem Auslass zugeordnet ist, und einem zweiten Schmelzekanalabschnitt, der einem anderen Auslass zugeordnet ist, wobei der erste Schmelzekanalabschnitt eine erste Länge aufweist und der zweite Schmelzekanalabschnitt eine zweite Länge aufweist,
**dadurch gekennzeichnet, dass**
die erste Länge im Wesentlichen gleich der zweiten Länge ist, und
eine Gabelung (160) vorhanden ist, wo der erste Schmelzekanalabschnitt, der einem Auslass zugeordnet ist, und der zweite Schmelzekanalabschnitt, der einem anderen Auslass zugeordnet ist, auseinanderlaufen, wobei die Gabelung an einer Stelle positioniert ist, an der ein Abstand zwischen dem Einlass und der Gabelung zumindest 60 % einer Länge des Schmelzekanals beträgt.

2. Einstückige Sammelleitungsanordnung nach Anspruch 1, wobei die Gabelung (160) an einer Stelle positioniert ist, an der ein Abstand zwischen dem Einlass und der Gabelung zumindest 70 % einer Länge des Schmelzekanals beträgt.

3. Einstückige Sammelleitungsanordnung nach Anspruch 1, wobei die Gabelung (160) an einer Stelle positioniert ist, an der ein Abstand zwischen dem Einlass und der Gabelung zumindest 80 % einer Länge des Schmelzekanals beträgt.

4. Einstückige Sammelleitungsanordnung nach Anspruch 1, wobei die Gabelung (160) an einer Stelle positioniert ist, an der ein Abstand zwischen dem Einlass und der Gabelung zumindest 90 % einer Länge des Schmelzekanals beträgt.

## Revendications

1. Ensemble collecteur monobloc pour un système moule-outil (100), comprenant :
un ensemble collecteur monobloc (102) formé d'un seul corps et ayant une première surface extérieure et une deuxième surface extérieure, la première surface extérieure et la deuxième surface extérieure étant sensiblement planes et parallèles l'une à l'autre ;
une pluralité d'entrées (104), chaque entrée étant définie au niveau de la première surface extérieure de l'ensemble collecteur monobloc (102) ;
une pluralité de sorties (106), chaque sortie étant définie au niveau de la deuxième surface extérieure de l'ensemble collecteur monobloc (102) et configurée pour alimenter une cavité de moule séparée, où le rapport sorties sur entrées est d'au moins 2:1 ;
une pluralité de canaux de coulée (103), où chaque canal de coulée (103) s'étend entre une seule entrée et au moins deux sorties, chaque sortie étant reliée au canal de coulée (103) par une section de canal de coulée associée, de sorte que chaque entrée soit en communication fluidique avec au moins une première section de canal de coulée associée à une sortie, et une deuxième section de canal de coulée associée à une autre sortie, où la première section de canal de coulée a une première longueur et la deuxième section de canal de coulée a une deuxième longueur, **caractérisé en ce que**
la première longueur est sensiblement égale à la deuxième longueur, et
une bifurcation (160) où la première section de canal de coulée associée à une sortie et la deuxième section de canal de coulée associée à une autre sortie divergent, où la bifurcation est positionnée à un emplacement dans lequel une distance entre l'entrée et la bifurcation est d'au moins 60% d'une longueur du canal de coulée.

2. Ensemble collecteur monobloc de la revendication 1, dans lequel la bifurcation (160) est positionnée à un emplacement dans lequel une distance entre l'entrée et la bifurcation est d'au moins 70% d'une longueur du canal de coulée.

3. Ensemble collecteur monobloc de la revendication 1, dans lequel la bifurcation (160) est positionnée à un emplacement dans lequel une distance entre l'entrée et la bifurcation est d'au moins 80% d'une longueur du canal de coulée.

4. Ensemble collecteur monobloc de la revendication 1, dans lequel la bifurcation (160) est positionnée à un emplacement dans lequel une distance entre l'entrée et la bifurcation est d'au moins 90% d'une longueur du canal de coulée.
